# EUROPÄISCHE PATENTANMELDUNG

(11) **EP 3 916 835 A1**
(43) Veröffentlichungstag der Anmeldung: **01.12.2021**
(21) Anmeldenummer: 20177561.6
(22) Anmeldetag: 29.05.2020
(51) Int. Cl.: H01M 2/10, H01M 10/658, H01M 10/0525

(54) **PROPAGATIONSBARRIERE FÜR BATTERIEN**

(71) Anmelder: Zentrum für Sonnenenergie- und Wasserstoff-Forschung Baden-Württemberg Gemeinnützige Stiftung, 70563 Stuttgart (DE)
(72) Erfinder: Harry, Doering, 89275 Elchingen (DE); Bauer, Marius, 89075 Ulm (DE); Becher, Daniel, 89584 Ehingen (DE); Menz, Fabian, 89250 Senden (DE); Böse , Olaf, 89081 Ulm (DE)
(74) Vertreter: Ter Meer Steinmeister & Partner

(57) **Zusammenfassung**

Die vorliegende Erfindung betrifft eine Barriere zur Abwendung der Propagation eines thermischen Ereignisses innerhalb eines mehrzelligen Batteriemoduls, umfassend eine Gerüststruktur und ein hitzeabsorbierendes Material, welches Wasser und eine auf biogenen Rohstoffen basierte Komponente umfasst. Des Weiteren bezieht sich die Erfindung auf ein mehrzelliges Batteriemodul und eine Batterie umfassend mindestens eine solche Barriere. Schließlich ist auch ein Verfahren zur Abwendung der Propagation eines thermischen Ereignisses innerhalb eines mehrzelligen Batteriemoduls Gegenstand der vorliegenden Erfindung.

## Beschreibung

### Gebiet der Erfindung

Die vorliegende Erfindung betrifft eine Barriere zur Abwendung der Propagation eines thermischen Ereignisses innerhalb eines mehrzelligen Batteriemoduls, umfassend eine Gerüststruktur und ein hitzeabsorbierendes Material, welches Wasser und eine auf biogenen Rohstoffen basierte Komponente umfasst. Des Weiteren bezieht sich die Erfindung auf ein mehrzelliges Batteriemodul und eine Batterie umfassend mindestens eine solche Barriere. Schließlich ist auch ein Verfahren zur Abwendung der Propagation eines thermischen Ereignisses innerhalb eines mehrzelligen Batteriemoduls Gegenstand der vorliegenden Erfindung.

### Technischer Hintergrund und Stand der Technik

Thermische Ereignisse können grundsätzlich in allen Batterietypen vorkommen. Eines der am meisten gefürchteten thermischen Ereignisse ist das thermische Durchgehen einer Batterie (besser bekannt unter dem englischen Begriff "thermal runaway", TR). Dazu kann es kommen, wenn die Geschwindigkeit, mit der die Batterie Wärme erzeugt, die Geschwindigkeit übersteigt, mit der die Wärme abgeführt werden kann. Wird hierbei eine kritische Temperatur überschritten, kommt es dazu, dass sich der im Inneren der Batterie ablaufende Wärme produzierende Prozess selbst verstärkt und sich die Batterie innerhalb kürzester Zeit auf mehrere hundert Grad Celsius erhitzt. Gleichzeitig kommt es zu einem extremen Druckanstieg in der Zelle, welcher ein explosionsartiges Austreten von Zersetzungsgasen und einen Brand zur Folge haben kann.

In mehrzelligen Batteriemodulen ist die Gefahr, die von einem solchen thermischen Ereignis ausgeht, potenziert. Der Abstand zwischen den einzelnen Zellen bietet keinen ausreichenden Schutz gegen eine Propagation des thermischen Durchgehens. Aufgrund der hohen Temperatur, die sich bei der vom thermischen Durchgehen betroffenen Zelle einstellt, erhitzen sich auch die angrenzenden Zellen über die kritische Temperatur hinaus. Dementsprechend kann das thermische Durchgehen einer einzigen Zelle leicht zu einer Zerstörung des kompletten Batteriemoduls führen.

Besonders anfällig für thermisches Durchgehen sind Lithium-Ionen-Batterien. Diese besitzen eine erheblich höhere Energiedichte als andere Batterietypen und setzen Zersetzungsgase mit einem großen Anteil an Sauerstoff frei, was zu noch höheren Temperaturen im Fehlerfall führen kann. Zudem ist die Gefahr der Propagation von thermischen Ereignissen in Lithium-Ionen-Batteriemodulen erhöht. Letzteres kann dadurch begründet werden, dass ein Großteil der Lithium-Ionen-Batteriemodule in Elektrofahrzeugen und tragbaren elektronischen Geräten zum Einsatz kommt. In beiden Anwendungsfeldern ist der Platzbedarf des Batteriemoduls kritisch, so dass viele Batteriehersteller dazu übergegangen sind, die Packungsdichte der Lithium-Ionen-Zellen bis auf das Äußerte zu erhöhen. Somit steht nur wenig Bauraum für Barrieren zur Abwendung der Propagation von thermischen Ereignissen zu Verfügung, was in vielen Fällen eine ungenügende thermische Isolierung zwischen den Zellen bewirkt.

Vor diesem Hintergrund werden im Stand der Technik unterschiedliche Barrierematerialien für Batterien vorgeschlagen.

Die WO 2010/017169 A1 beschäftigt sich ebenfalls mit dem Problem des thermischen Durchgehens von mehrzelligen Batteriepacks, insbesondere von Lithiumionen-Batteriepacks, und schlägt Strategien vor, wie die Übertragung eines thermischen Ereignisses von einer Batteriezelle auf eine benachbarte Batteriezelle verhindert werden kann. Hierfür wird ein Element bereitgestellt, welches sich zur Anordnung zwischen den Zellen eines mehrzelligen Batteriepacks eignet und eine gewisse Menge an Wasser in Form eines Hydrogels enthält. Das Hydrogel wird unter Verwendung eines Superabsorbers aus Polyacrylsäure erhalten. Es wird in einer flexiblen Beutelverpackung oder einem formstabilen Container vorgehalten und in das Batteriemodul eingebracht. Die flexible Beutelverpackung passt sich an die Form der Batteriezellen an, um die Übertragung der Wärme von der Batteriezelle auf das Hydrogel zu gewährleisten. Der Container kann maßangefertigt werden, um ebenfalls einen Kontakt zu der Zelloberfläche herzustellen. Das vorgeschlagene Element zur Unterdrückung von thermischem Durchgehen ist jedoch in mehrerlei Hinsicht verbesserungswürdig: Einerseits ist die Produktion des Elements nicht nachhaltig, da zur Herstellung des Hydrogels synthetisch gewonnene Polyacrylsäure notwendig ist. Andererseits kann das Element nur begrenzt als Barriere fungieren. In der Ausführungsform, in der das Hydrogel in einer Beutelverpackung vorgehalten wird, fehlt es an einem Abstandshalter zwischen den Zellen, der das thermische Durchgehen einer angrenzenden Zelle überdauern würde. Sobald das Wasser verdampft ist und der Superabsorber zersetzt wurde, können benachbarte Zellen in direkten Kontakt miteinander kommen. In der Ausführungsform, in der das Hydrogel in einem Container vorgehalten wird, sind die Zellen zwar nicht in direktem Kontakt miteinander, bilden die aus einem Vollmaterial gebildeten Containerwände jedoch eine Wärmebrücke, über welche das thermische Ereignis nach Verdampfen des im Hydrogel enthaltenen Wassers dennoch weiter propagieren kann.

In der EP 3 550 662 A1 wird eine Wärmeabsorptions- und Wärmeisolationsstruktur für ein Batteriemodul beschrieben, das ein Batteriemodul mit einer Vielzahl von Batteriezellen sowie ein wärmeabsorbierendes Mittel umfasst, wobei das wärmeabsorbierende Mittel zwischen der Vielzahl von Batteriezellen angeordnet ist und in der Lage ist, ein Gas zu erzeugen. Als Beispiel für ein solches wärmeabsorbierendes Mittel wird ein Latentwärmespeicher (engl. phase change material, PCM) in Form eines hydrierten Salzes genannt. Des Weiteren werden als wärmeabsorbierende Mittel Feuerlöschmittel, Silikonöle oder fluorierte Flüssigkeiten angeführt. Keines der vorgeschlagenen wärmeabsorbierenden Mittel ist jedoch für die Anwendung in Batterien besonders attraktiv: Das Silikonöl ist eine Flüssigkeit und muss demnach von einer formstabilen Hülle umgeben werden, um zu gewährleisten, dass es dauerhaft an der gewünschten Stelle zwischen den Batteriezellen bleibt. Außerdem beträgt die spezifische Verdampfungsenthalpie von Hexamethyldisiloxan (das Silikonöl mit einer Siedetemperatur von 101 °C) nur etwa 204 - 222 J/g. Ein Salzhydrat kann zwar aufgrund seines festen Aggregatzustandes formstabil bereitgestellt werden und bedarf keiner Hülle, jedoch ist die Verdampfungsenthalpie auch für die bekannten Salzhydrate unzureichend. Feuerlöschmittel und fluorierte Flüssigkeiten sind schon per se als wärmeabsorbierende Mittel ungeeignet, da sie aufwendig und kostenintensiv in der Herstellung sind.

Die US 2014/0224465 A1 offenbart ein Wärmebarriere-System für einen Batteriepack, der eine Vielzahl von Batteriezellen umfasst, wobei das Wärmebarriere-System eine Wärmesperre umfasst, die zwischen jeder der Vielzahl von Batteriezellen in dem Batteriepack angeordnet ist, wobei die genannte Wärmesperre eine Querschnittsfläche hat, die mindestens gleich einer benachbarten Batteriezelle ist, und wobei die Wärmesperre ein wärmeabsorbierendes Material in einer Menge enthält, die ausreicht, um die von einer fehlerhaften Batterie abgegebene Wärme zu absorbieren. Als wärmeabsorbierendes Material wird bevorzugt ein Hydrogel aus Wasser und einem hydrophilen Superabsorber-Polymer eingesetzt, beispielsweise ein Hydrogel aus Wasser und Polyacrylamid oder einem Copolymer aus Acrylamid und Acrylsäure. Eine Schwäche eines solchen Wärmebarriere-Systems liegt aber erneut darin, dass deren Produktion energie- und ressourcenintensiv ist.

### Aufgabe der Erfindung

Ausgehend von diesem Stand der Technik lag die Aufgabe der vorliegenden Erfindung in der Bereitstellung einer verbesserten und in der Herstellung nachhaltigeren Barriere zur Abwendung der Propagation eines thermischen Ereignisses innerhalb eines mehrzelligen Batteriemoduls sowie eines entsprechenden Batteriemoduls. Weiterhin hat sich die vorliegende Erfindung zum Ziel gesetzt, ein nachhaltiges Verfahren zur Abwendung der Propagation eines thermischen Ereignisses innerhalb eines mehrzelligen Batteriemoduls anzugeben.

### Zusammenfassung der Erfindung

Diese Aufgabe bzw. dieses Ziel wird durch die die Barriere gemäß Anspruch 1, das Batteriemodul gemäß Anspruch 12 und das Verfahren gemäß Anspruch 14 gelöst bzw. erreicht.

Erfindungsgemäß wird eine Barriere zur Abwendung der Propagation eines thermischen Ereignisses innerhalb eines mehrzelligen Batteriemoduls bereitgestellt, wobei die Barriere eine thermisch und elektrisch isolierende Gerüststruktur umfasst, welche eine Vielzahl an Hohlräumen aufweist, die zumindest teilweise mit einem hitzeabsorbierenden Material gefüllt sind, und wobei das hitzeabsorbierende Material Wasser und eine auf biogenen Rohstoffen basierte Komponente umfasst.

Die thermisch und elektrisch isolierende Gerüststruktur ist ein wärmedämmendes Element. Sie kann den Wärmetausch zwischen zwei benachbarten Zellen eines mehrzelligen Batteriemoduls verzögern und wirkt gleichzeitig als Abstandshalter. So ist gleichzeitig auch garantiert, dass keine elektrischen Kurzschlüsse zwischen den Batteriezellen auftreten können.

Dadurch dass die Gerüststruktur eine Vielzahl von Hohlräumen aufweist, die zumindest teilweise mit einem hitzeabsorbierenden Material gefüllt sind, kann die Wärmedämmwirkung weiter erhöht werden. Tritt an einer Zelle des Batteriemoduls ein thermisches Ereignis auf, wird das in dem hitzeabsorbierenden Material enthaltene Wasser zunächst bis zur Siedetemperatur erhitzt. Weitere Hitze wird absorbiert, indem das Wasser verdampft. Der Wasserdampf entweicht dann in die Umgebung und trägt so dazu bei, dass die Propagation des thermischen Ereignisses abgewendet und die benachbarte Batteriezelle vor einem kritischen Temperaturanstieg geschützt wird.

Neben den positiven Anwendungseigenschaften ist der Umstand, dass die erfindungsgemäßen Barrieren Wasser und eine auf biogenen Rohstoffen basierte Komponente umfassen, besonders vorteilhaft. Im Vergleich zu anderen Flüssigkeiten besitzt Wasser eine relativ hohe spezifische Wärmekapazität und spezifische Verdampfungsenthalpie. Aus diesem Grund kann Wasser besonders viel Wärme aufnehmen und dissipieren. Die auf biogenen Rohstoffen basierte Komponente kann dem hitzeabsorbierenden Material eine höhere Festigkeit verleihen. Zudem kann die Verwendung synthetisch hergestellter Superabsorber umgangen werden. Dies trägt dazu bei, den CO₂-Fußabdruck, der mit dem Produktionsprozess der Barriere verknüpft ist, zu senken.

Unter den Begriff "biogene Rohstoffe" im Sinne der vorliegenden Erfindung fallen organische Rohstoffe, die land- und forstwirtschaftlich erzeugt oder aus Bakterien-, Hefen-, Pilz- Aqua- oder Meereskulturen isoliert worden sind sowie organische Rohstoffe tierischer Herkunft, nämlich solche, die ohnehin als Nebenprodukt bei der Tierschlachtung anfallen und einer Verwertung bedürfen. Ferner sind "biogene Rohstoffe" im Sinne der vorliegenden Erfindung gemäß der DIN EN 13432 biologisch abbaubar. Den biogenen Rohstoffe gegenüber stehen fossile Rohstoffe und Energieträger auf petrochemischer Basis, unter anderem Stoffe, die durch chemische Syntheseverfahren gewonnen worden sind und/oder nicht biologisch abbaubar sind.

In einer bevorzugten Ausführungsform umfasst das hitzeabsorbierende Material 70 - 99,8 Gew.-% Wasser und 0,2 - 30 Gew.-% einer auf biogenen Rohstoffen basierten Komponente. Besonders bevorzugt ist, wenn das hitzeabsorbierende Material 85 - 99,5 Gew.-% Wasser und 0,5 - 15 Gew.-% einer auf biogenen Rohstoffen basierten Komponente umfasst. Ein hoher Gewichtsanteil an Wasser stellt sicher, dass große Wärmemengen durch das hitzeabsorbierende Material absorbiert werden können. Zudem ist Wasser kostengünstig und vielerorts schnell verfügbar. Der Zusatz eines Mindestanteils einer Komponente, die auf biogenen Rohstoffen basiert, erlaubt, dem hitzeabsorbierenden Material mehr Formstabilität zu verleihen.

In einer weiteren bevorzugten Variante der Erfindung umfasst das hitzeabsorbierende Material ein Hydrogel. Das Hydrogel ist ein Netzwerk aus mindestens einem natürlich vorkommenden Geliermittel und Wasser. Dem Geliermittel kommt damit die Funktion eines Wasserspeichers bzw. Bindemittels zu.

Das natürlich vorkommende Geliermittel kann ein Polysaccharid und/oder Gelatine sein. Soweit das natürlich vorkommende Geliermittel ein Polysaccharid ist, ist dieses bevorzugt ausgewählt aus der Gruppe bestehend aus Agar-Agar, Stärke, insbesondere Maisstärke, Stärkederivaten, Hydroxypropylmethylcellulose, Methylcellulose, κ-Carrageenan, 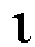 -Carrageenan, Pektin, Gellan, Scleroglucan, Alginaten und Kombinationen hiervon. Besonders bevorzugt ist das Polysaccharid aus der Gruppe bestehend aus Agar-Agar, Stärke, insbesondere Maisstärke, Stärkederivaten, κ-Carrageenan, 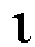 -Carrageenan, Pektin, Gellan, Scleroglucan und Kombinationen hiervon ausgewählt.

Obwohl Herkunft und Zusammensetzung der oben genannten Polysaccharide dem Fachmann bekannt sind, wird nachfolgend auf einzelne Polysaccharide näher eingegangen:
Agar-Agar wird aus den Zellwänden von Algen, wie z.B. Blau- oder Rotalgen gewonnen. Es entspricht im Wesentlichen einer Mischung der Polysaccharide Agarose und Agaropektin, wobei Agarose bevorzugt 60-80 Gew.-% der Mischung ausmacht. Agarose ist ein Polysaccharid aus D-Galactose und 3,6-Anhydro-L-Galactose, die glycosidisch miteinander verbunden sind. Agaropektin ist ein Polysaccharid aus β-1,4 und α-1-3 glycosidisch verknüpfter D-Galactose sowie 3,6-Anhydro-L-Galactose. Etwa jeder zehnte Galactose-Rest ist an O-6 mit Schwefelsäure verestert und enthält zusätzliche Sulfat-Reste. Agar-Agar ist ein ganz besonders bevorzugtes natürlich vorkommendes Geliermittel im Sinne der vorliegenden Erfindung. Grund dafür ist, dass ein auf Agar-Agar basierendes Hydrogel bei Temperaturen unterhalb von etwa 85°C formstabil ist und erst oberhalb dieser Temperatur Wasser abgibt.

κ-Carrageenan besteht aus sich wiederholenden Monomeren aus D-Galaktose-4-sulfat und 3,6-Anhydro-D-galaktose. 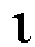 -Carrageenan unterscheidet sich von κ-Carrageenan nur darin, dass die 3,6-Anhydro-D-galaktose-Einheit in C-2-Position eine zusätzliche Sulfat-Gruppe trägt. Beide Carrageenane kommen in der Natur als Grundsubstanz der Zellwände bei einer Vielzahl von Rotalgen vor.

Gellan ist ein Polysaccharid umfassend eine Wiederholungseinheit, die aus einer Rhamnose-, einer Glucuronsäure- und zwei Glucose-Grundeinheiten, die mit Essigsäure und Glycerinsäure verestert sind, besteht. Es kann beispielsweise durch Fermentation von Kohlenhydraten durch den Bakterienstamm Pseudomonas elodea hergestellt werden.

Scleroglucan ist ein β-1,3-Glucan das im Durchschnitt an jedem dritten Zucker einen Glucoserest als Seitekette trägt. Scleroglucan wird bevorzugt aus Pilzkulturen gewonnen.

Vorteilhaft bei der erfindungsgemäßen Barriere ist, wenn das hitzeabsorbierende Material 0,05 - 10 Gew.-%, bevorzugt 0,5 bis 8 Gew.-%, besonders bevorzugt 0,5 - 5 Gew.-%, von mindestens einem Additiv umfasst. Das mindestens eine Additiv ist dabei bevorzugt aus der Gruppe bestehend aus Rheologiemodifikatoren, Bioziden, Salzen, Flammschutzmitteln, Farbstoffen und Kombinationen hiervon ausgewählt. Soweit das mindestens eine Additiv aus der Gruppe der Rheologiemodifikatoren stammt, ist dieses bevorzugt aus der Gruppe bestehend aus Xanthan, Cellulose, Carboxymethylcellulose, Gummi Arabicum, Guaran, Maltodextrin und Kombinationen hiervon ausgewählt. Soweit das mindestens eine Additiv aus der Gruppe der Hydratsalze stammt, ist dieses bevorzugt aus der Gruppe bestehend aus Na₂CO₃·10H₂O, Na₂SO₄·10H₂O, Na₃PO₄·12H₂O und MgSO₄·7H₂O ausgewählt. Die Verwendung von Bioziden als Additiv kann das hitzeabsorbierende Material insbesondere vor einem Befall von Mikroorganismen schützen und erhöht so die Haltbarkeit der erfindungsgemäßen Barriere.

In einer Variante der vorliegenden Erfindung besteht das hitzeabsorbierende Material im Wesentlichen aus einem Hydrogel aus mindestens einem natürlich vorkommenden Geliermittel und Wasser sowie optionalen Additiven ausgewählt aus der Gruppe bestehend aus Rheologiemodifikatoren, Bioziden, Salzen, Flammschutzmitteln, Farbstoffen und Kombinationen hiervon, die in einem Anteil von bis zu 5 Gew.-%, bevorzugt in einem Anteil von bis zu 3 Gew.-%, enthalten sein können.

Statt eines natürlich vorkommenden Geliermittels kann das hitzeabsorbierende Material der Barriere auch Korkpartikel enthalten, die in Wasser aufgequollen sind. Die Korkpartikel können aus größeren Korkstücken oder Korkplatten durch einen Mahlvorgang erhalten werden und liegen bevorzugt als Schüttung in den Hohlräumen der Gerüststruktur vor.

Bezogen auf das Volumen der Hohlräume sind die Hohlräume der Gerüststruktur bevorzugt zu mindestens 65 Vol.-%, bevorzugt zu mindestens 70 Vol.-%, besonders bevorzugt zu mindestens 90 Vol.-%, insbesondere zu mindestens 98 Vol.-% mit dem hitzeabsorbierenden Material gefüllt.

Die Gerüststruktur enthält bevorzugt 60 - 100 Gew.-% eines polymeren Matrixmaterials und 0 - 40 Gew.-% Füllstoffe, besonders bevorzugt 70 - 99 Gew.-% eines polymeren Matrixmaterials und 1 - 30 Gew.-% Füllstoffe. Das polymere Matrixmaterial kann dabei aus der Gruppe bestehend aus Polyetheretherketon (PEEK), Polyaramid, Silikon und Kombinationen hiervon ausgewählt sein. Die Füllstoffe sind hingegen bevorzugt ausgewählt aus der Gruppe bestehend aus Ton, Blähton, Glimmer, Glas, Blähglas, Stein, Korkpartikeln und Kombinationen hiervon.

Polyetheretherketon (PEEK), Polyaramid und Silikon eignen sich als Material für die Gerüststruktur, da sie keine Korrosion in wässrigen Medien zeigen, ein niedriges spezifisches Gewicht aufweisen und thermisch isolierend wirken. Silikon ist aufgrund seiner guten Verarbeitungseigenschaften und geringen Herstellungskosten besonders bevorzugt. Mit Hilfe der Füllstoffe können Kompressibilität bzw. mechanische Härte und Wärmeleitungseigenschaften der Gerüststruktur noch in gewissen Grenzen an die jeweiligen Anforderungen angepasst werden. Die oben angegebenen Füllstoffe sind dabei besonders vorteilhaft. Einerseits ändern sie ihren Zustand im Bereich von 100-800°C nicht. Andererseits sind die thermischen Ausdehnungskoeffizienten dieser Materialien im Bereich von 100-800°C ebenfalls vergleichsweise gering.

Weiterhin ist bevorzugt, wenn die Gerüststruktur eine Beschichtung aufweist. Die Beschichtung verleiht der Gerüststruktur eine hohe Hitzebeständigkeit.

Die Vielzahl an Hohlräumen kann entweder geordnet oder ungeordnet in der Gerüststruktur vorliegen. Ist die Gerüststruktur ein fester Schaum, liegt die Vielzahl an Hohlräumen ungeordnet vor.

In einer bevorzugten Ausführungsform sind die Hohlräume der Gerüststruktur versiegelt. Insbesondere ist die Oberfläche der Gerüststruktur mit einer Folie versiegelt. Durch die Versiegelung kann ein Austrocknen des hitzeabsorbierenden Materials vor dem Auftreten eines thermischen Ereignisses verhindert werden. Die Versiegelung erfolgt bevorzugt mit einer Polymerfolie, einer Metallfolie oder einem Laminat aus den vorgenannten Folien.

Die Polymerfolie ist vorzugsweise wasserundurchlässig und wasserunlöslich. Außerdem ist die gemäß der DIN 53122-2 bestimmte Wasserdampfdurchlässigkeit der Polymerfolie bevorzugt gering. Die Polymerfolie kann insbesondere aus der Gruppe bestehend aus Polyethylen (PE), Polypropylen (PP), Polyvinylidenfluorid (PVDF), Polychlortrifluorethylen (PCTFE), Polyphenylensulfid (PPS), Ethylen-Tetrafluorethylen-Copolymer (ETFE) und Kombinationen hiervon ausgewählt sein. Die Metallfolie ist bevorzugt eine Aluminiumfolie. Als Laminat aus mindestens einer Polymerfolie und mindestens einer Metallfolie kann beispielsweise eine sogenannte "Pouch"-Verbundfolie verwendet werden. Diese umfasst eine Aluminiumfolie und wird herkömmlicherweise zur Ummantelung von Lithium-Ionen-Akkus verwendet.

Die Gerüststruktur kann als Schaum vorliegen. Alternativ kann die Gerüststruktur als Schicht mit im Querschnitt wabenförmigen, runden und/oder eckigen Hohlräumen ausgebildet sein. Bei einer Gerüststruktur mit im Querschnitt wabenförmigen Hohlräumen, wie beispielsweise den "Honeycomb Aramidwaben", die kommerziell unter dem Namen Nomex® vertrieben werden, ist es bevorzugt, wenn die Hohlräume eine Größe von 0,5 bis 20 mm, bevorzugt von 0,5 bis 10 mm, besonders bevorzugt von 3,0 bis 9,0 mm aufweisen.

Bevorzugt liegt die Barriere als Schicht vor, insbesondere als Schicht mit einer Fläche, die mindestens 95% der Fläche zweier Batteriezellen entspricht, die durch die Barriere voneinander abgeschirmt werden sollen.

Die Schichtdicke der Barriere beträgt bevorzugt 0,5 bis 20 mm, besonders bevorzugt 0,5 bis 5 mm, ganz besonders bevorzugt 0,5 bis 2 mm.

Ein weiterer Aspekt der vorliegenden Erfindung besteht in der Bereitstellung eines mehrzelligen Batteriemoduls oder einer Batterie umfassend mindestens eine der zuvor beschriebenen Barrieren oder eine in Wasser getränkte Korkschicht, wobei die in Wasser getränkte Korkschicht bevorzugt 30-45 Gew.-% Kork und 55-70 Gew.-% Wasser umfasst.

Die mindestens eine Barriere oder die in Wasser getränkte Korkschicht ist dabei bevorzugt in einem Zwischenraum zwischen zwei Zellen und/oder in einem Zwischenraum zwischen einer äußeren Zelle und einer Wand des Batteriemoduls angeordnet. Bei der Anordnung zwischen einer äußeren Zelle und einer Wand des Batteriemoduls bewirkt die Barriere bzw. die in Wasser getränkte Korkschicht zusätzlich eine Wärmedämmung gegenüber der Umgebung.

Die in dem Batteriemodul oder in der Batterie enthaltenen Batteriezellen können Stapelzellen sein und die Barriere ist bevorzugt in mindestens einem Zwischenraum zwischen zwei Stapelzellen angeordnet. Zu einer anwendungstechnisch besonders interessanten Ausführungsform gelangt man, wenn die Stapelzellen Lithium-Ionen-Stapelzellen sind.

Zuletzt gibt die vorliegende Erfindung auch ein Verfahren zur Abwendung der Propagation eines thermischen Ereignisses innerhalb eines mehrzelligen Batteriemoduls an. Bei diesem Verfahren wird entweder eine der zuvor beschriebenen Barrieren oder eine in Wasser getränkte Korkschicht zwischen den Batteriezellen angeordnet. Der Vorteil bei der Verwendung der in Wasser getränkten Korkschicht ist die vereinfachte Herstellung. Da Korkplatten bereits für unterschiedliche Anwendungen hergestellt werden, müssen diese nur noch auf eine passende Größe zurechtgeschnitten und in Wasser getränkt werden.

### Beschreibung der bevorzugten Ausführungsformen

Bevorzugte Ausführungsformen der Erfindung werden unter Bezugnahme auf die nachfolgenden Beispiele, Experimente und Figuren näher erläutert, ohne die Erfindung darauf beschränken zu wollen.

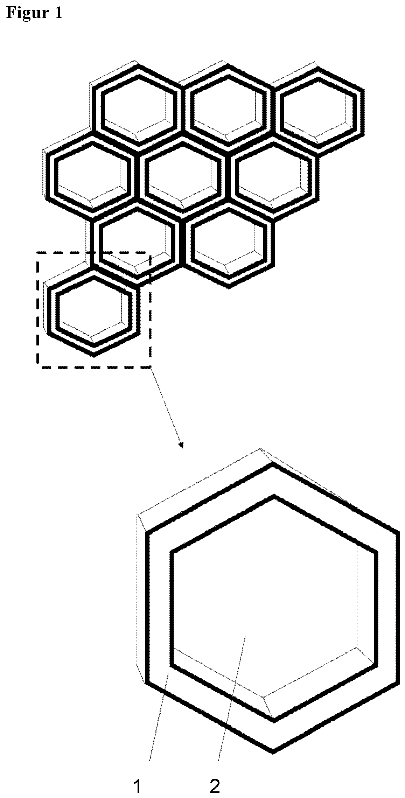

Figur 1 zeigt ein Schema einer Gerüststruktur 1, welche als Schicht mit im Querschnitt wabenförmigen Hohlräumen 2 ausgebildet ist.

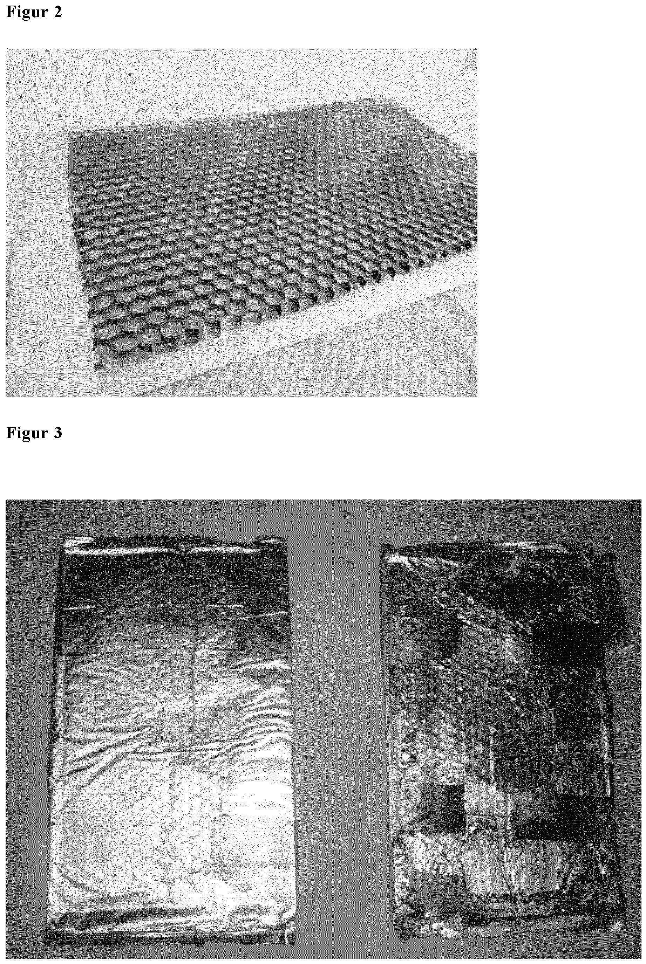

Figur 2 zeigt eine Fotographie einer erfindungsgemäßen Barriere ohne eine versiegelnde Folie. Die Gerüststruktur der Barriere ist hier ebenfalls als Schicht mit im Querschnitt wabenförmigen Hohlräumen ausgebildet.
Figur 3 zeigt eine Fotographie zweier erfindungsgemäßer Barrieren, bei denen die Hohlräume der Gerüststruktur mit einer Pouch-Folie versiegelt sind. Die linke Barriere ist unbenutzt, während die rechte Barriere bereits zur Abschirmung einer thermisch durchgehenden Batteriezelle gedient hat.

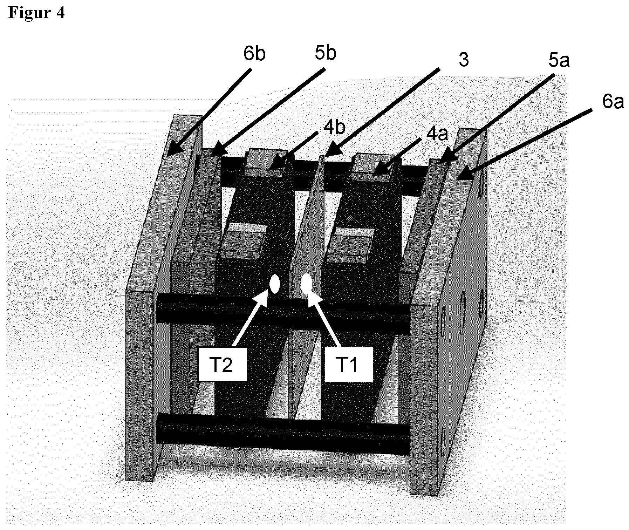

Figur 4 zeigt die Anordnung einer erfindungsgemäßen Barriere 3 in einem Batterien-(Test-)Modul umfassend zwei Batteriezellen 4a und 4b. Bei 5a und 5b handelt es sich um eine thermische Isolation, welche nach dem proaktiven Auslösen des thermischen Ereignisses verhindert, dass ein Teil der freiwerdenden thermischen Energie von den Spannplatten 6a und 6b, die eine gewissen Wärmekapazität aufweisen, aufgenommen wird. Dadurch werden Messfehler vermieden. Die Spannplatten sorgen für den mechanischen Zusammenhalt des Moduls. T1 und T2 zeigen die Messstellen, an denen die Temperaturmessung erfolgte. T1 ist dabei die Temperaturmessstelle der Zelle, bei der das thermische Ereignis ausgelöst wird, und T2 ist die Temperaturmessstelle an der benachbarten Zelle.

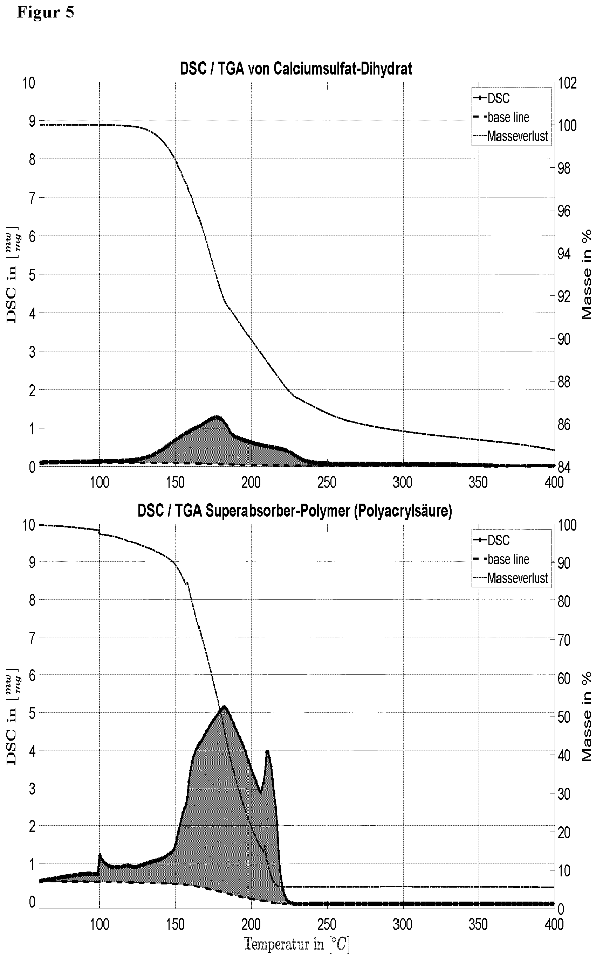

Figur 5 zeigt die Ergebnisse einer thermogravimetrischen Analyse (TGA) und dynamischen Differenzkalorimetrie (DSC) für Proben von zwei unterschiedlichen hitzeabsorbierenden Referenz-Materialien, dem Material 1 (siehe oberes Diagramm) und dem Material 2 (siehe unteres Diagramm). Geheizt wurde mit einer Rate von 10 K/min. Material 1 ist ein Vergleichsmaterial, bei dem ein Salzhydrat (Calciumsulfat Dihydrat, CaSO₄·2 H₂O) in eine Silikonmatrix eingebracht wurde. Material 2 ist ein Hydrogel welches unter Verwendung eines konventionellen Superabsorbers aus Polyacrylsäure erhalten wurde. Der Differenzwärmefluss "DSC" wird in mW/mg angegeben und ist so dargestellt, dass endotherme Ereignisse in dem Probentiegel als Ausschlag nach oben aufgezeichnet werden. Der prozentuale Massenverlust wird auf der rechten Y-Achse dargestellt. Die spezifische Verdampfungsenthalpie des Materials 1 wurde basierend auf dieser Messung zu 351 J/g bestimmt. Die spezifische Verdampfungsenthalpie des Materials 2 betrug 1185 J/g.

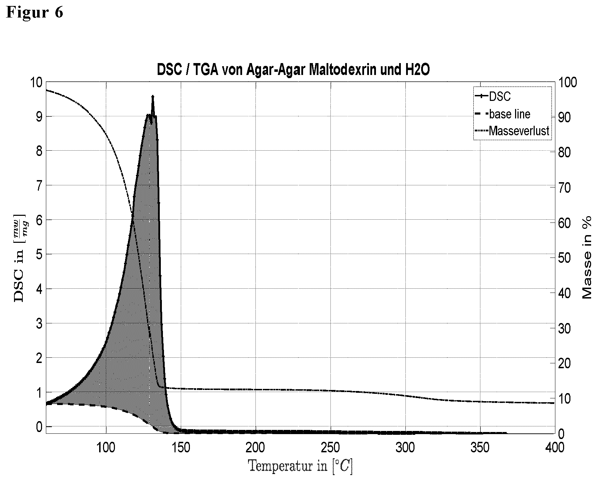

Figur 6 zeigt die Ergebnisse einer weiteren kombinierten TGA/DSC-Messung mit einer Heizrate von 10 K/min. Gemessen wurde eine Probe eines erfindungsgemäßen hitzeabsorbierenden Materials aus 10 Gew.-% eines Gelierpulvers und 90 Gew.-% Wasser, wobei das verwendete Gelierpulver aus etwa 30 Gew.-% Agar-Agar und etwa 70 Gew.-% Maltodextrin besteht. Der Differenzwärmefluss "DSC" wird in mW/mg angegeben und ist so dargestellt, dass endotherme Ereignisse in dem Probentiegel als Ausschlag nach oben aufgezeichnet werden. Der prozentuale Masseverlust wird auf der rechten Y-Achse dargestellt. Die in der DSC-Messung ermittelte spezifische Verdampfungsenthalpie des Materials 1880 J/g beträgt und damit höher ist als die spezifischen Verdampfungsenthalpien der Materialien 1 und 2 in Figur 5.

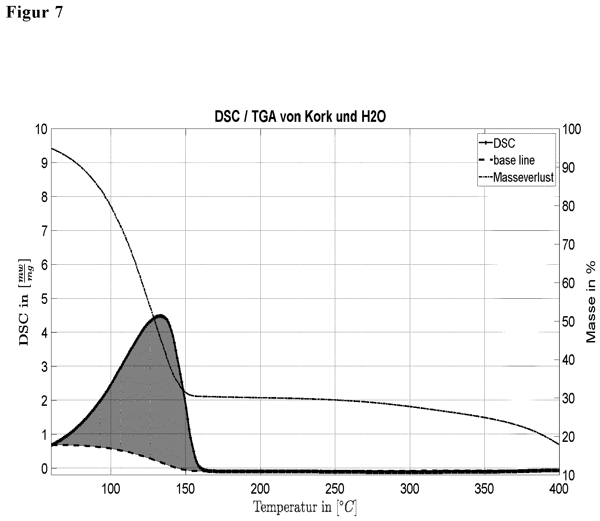

Figur 7 zeigt die Ergebnisse einer weiteren kombinierten TGA/DSC-Messung, bei der eine Heizrate von 10 K/min verwendet wurde. Die Probe besteht hier aus in Wasser getränktem Kork, nämlich 37.5 Gew.-% Kork und 62.5 Gew.-% Wasser. Der Differenzwärmefluss "DSC" wird in mW/mg angegeben und ist so dargestellt, dass endotherme Ereignisse in dem Probentiegel als Ausschlag nach oben aufgezeichnet werden. Der prozentuale Masseverlust wird auf der rechten Y-Achse dargestellt. Für die spezifische Verdampfungsenthalpie wird hier 1224 J/g ermittelt. Dies ist ebenfalls höher als die spezifischen Verdampfungsenthalpien der Materialien 1 und 2 in Figur 5.

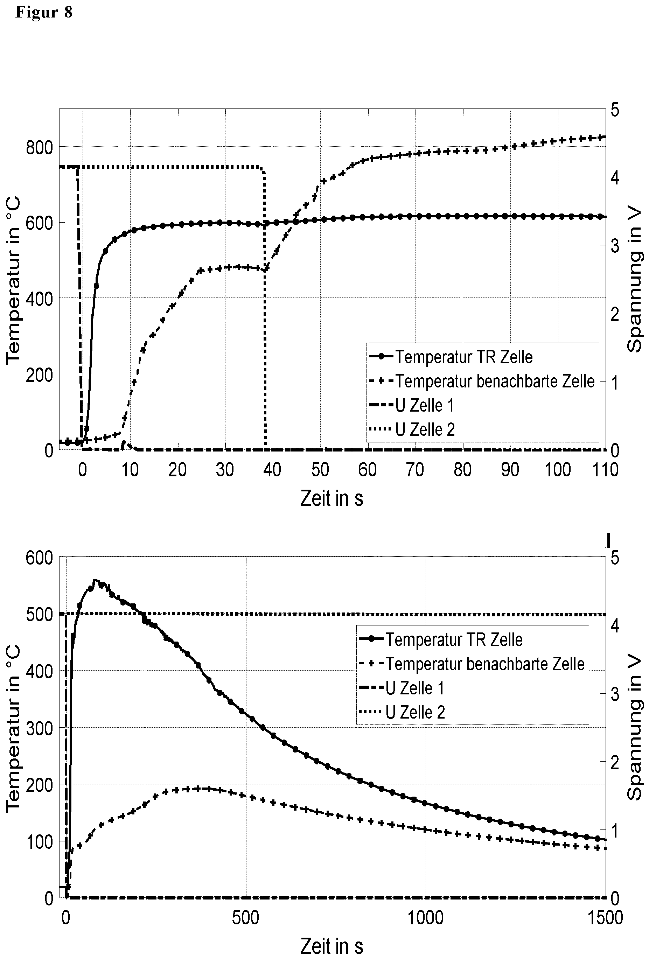

Figur 8 zeigt die Temperaturverläufe eines Batterien-(Test-)Moduls mit einem Aufbau analog zu Figur 4.

Der Temperaturverlauf im oberen Diagramm entspricht dem Temperaturverlauf, der bei einem Modul ohne Barriere gemessen wurde. Durch die Nagelpenetration wird das thermische Durchgehen von einer Batteriezelle (der Zelle 1, auch bezeichnet als TR-Zelle) ausgelöst. Die Temperatur steigt nach der Nagelpenetration und dem Spannungseinbruch von Zelle 1 (U Zelle 1) stark an. Auch die Temperatur der Nachbarzelle (Temperatur benachbarte Zelle, Zelle 2) steigt aufgrund des thermischen Kurzschlusses beider Zellen (Test ohne Barriere) mit einer kurzen Verzögerung stark an. Nach 38 Sekunden ist der Spannungseinbruch der Zelle 2 zu erkennen (U Zelle 2) und die Temperatur der benachbarten Zelle, welche thermisch durchgeht, steigt weiter. Die thermische Propagation hat stattgefunden.

Der Temperaturverlauf im unteren Diagramm ist der Temperaturverlauf, der bei einem Batterien-(Test-)Moduls mit einer zwischen den Batteriezellen angeordneten erfindungsgemäßen Barriere gemessen wurde. Wie eindeutig zu sehen ist, kann die erfindungsgemäße Barriere die zweite Batteriezelle soweit thermisch abzuschirmen, dass die kritische Temperatur nicht erreicht wird.

## Patentansprüche

1. Barriere zur Abwendung der Propagation eines thermischen Ereignisses innerhalb eines mehrzelligen Batteriemoduls, umfassend
eine thermisch und elektrisch isolierende Gerüststruktur, welche eine Vielzahl an Hohlräumen aufweist, die zumindest teilweise mit einem hitzeabsorbierenden Material gefüllt sind,
wobei das hitzeabsorbierende Material Wasser und eine auf biogenen Rohstoffen basierte Komponente umfasst.

2. Barriere nach Anspruch 1, wobei das hitzeabsorbierende Material
70 - 99,8 Gew.-% Wasser, und
0,2 - 30 Gew.-% einer auf biogenen Rohstoffen basierten Komponente umfasst.

3. Barriere nach Anspruch 1 oder 2, wobei das hitzeabsorbierende Material ein Hydrogel umfasst, welches ein Netzwerk aus mindestens einem biogenen Geliermittel und Wasser ist,
wobei das Geliermittel bevorzugt ein Polysaccharid und/oder Gelatine ist,
das Polysaccharid bevorzugt ausgewählt ist aus der Gruppe bestehend aus Agar-Agar, Stärke, insbesondere Maisstärke, Stärkederivaten, Hydroxypropylmethylcellulose, Methylcellulose, κ-Carrageenan, 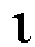 -Carrageenan, Pektin, Gellan, Scleroglucan, Alginaten und Kombinationen hiervon.

4. Barriere nach irgendeinem der vorangehenden Ansprüche, wobei das hitzeabsorbierende Material weiterhin 0,05 - 10 Gew.-% von mindestens einem Additiv umfasst,
wobei das mindestens eine Additiv bevorzugt aus der Gruppe bestehend aus Rheologiemodifikatoren, Bioziden, Salzen, Flammschutzmitteln und Farbstoffen und Kombinationen hiervon ausgewählt ist,
die Rheologiemodifikatoren bevorzugt ausgewählt sind aus der Gruppe bestehend aus Xanthan, Cellulose, Carboxymethylcellulose, Gummi Arabicum, Guaran, Maltodextrin und Kombinationen hiervon, und
die Salze bevorzugt Hydratsalze sind, besonders bevorzugt Hydratsalze ausgewählt aus der Gruppe bestehend aus Na₂CO₃·10H₂O, Na₂SO₄·10H₂O, Na₃PO₄·12H₂O und MgSO₄·7H₂O.

5. Barriere gemäß Anspruch 1, wobei das hitzeabsorbierende Material in Wasser aufgequollene Korkpartikel aus Baumrinde umfasst.

6. Barriere nach irgendeinem der vorangehenden Ansprüche, wobei die Hohlräume der Gerüststruktur bezogen auf das Volumen der Hohlräume zu mindestens 65 Vol.-%, bevorzugt zu mindestens 70 Vol.-%, besonders bevorzugt zu mindestens 90 Vol.-%, insbesondere zu mindestens 98 Vol.-% mit dem hitzeabsorbierenden Material gefüllt sind.

7. Barriere nach irgendeinem der vorangehenden Ansprüche, wobei die Gerüststruktur 60 - 100 Gew.-% eines polymeren Matrixmaterials und 0 - 40 Gew.-% Füllstoffe enthält, bevorzugt 70 - 99 Gew.-% eines polymeren Matrixmaterials und 1-30 Gew.-% Füllstoffe, wobei das polymere Matrixmaterial bevorzugt ausgewählt ist aus der Gruppe bestehend aus Polyetheretherketon (PEEK), Polyaramid, Silikon und Kombinationen hiervon, und wobei die Füllstoffe bevorzugt ausgewählt sind aus der Gruppe bestehend aus Ton, Blähton, Glimmer, Glas, Blähglas, Stein, Korkpartikeln und Kombinationen hiervon.

8. Barriere nach irgendeinem der vorangehenden Ansprüche, wobei die Gerüststruktur eine Beschichtung aufweist.

9. Barriere nach irgendeinem der vorangehenden Ansprüche, wobei die Hohlräume der Gerüststruktur versiegelt sind, um ein Austrocknen des hitzeabsorbierenden Materials vor dem Auftreten eines thermischen Ereignisses zu verhindern, bevorzugt mit einer Polymerfolie, einer Metallfolie oder einem Laminat aus den vorgenannten Folien,
wobei die Polymerfolie bevorzugt ausgewählt ist aus der Gruppe bestehend aus Polyethylen (PE), Polypropylen (PP), Polyvinylidenfluorid (PVDF), Polychlortrifluorethylen (PCTFE), Polyphenylensulfid (PPS), Ethylen-Tetrafluorethylen-Copolymer (ETFE) und Kombinationen hiervon und wobei die Metallfolie bevorzugt eine Aluminiumfolie ist.

10. Barriere nach irgendeinem der vorangehenden Ansprüche, wobei die Gerüststruktur als Schicht mit im Querschnitt wabenförmigen, runden oder eckigen Hohlräumen oder als Schaum oder als Kombination hiervon ausgebildet ist.

11. Barriere nach irgendeinem der vorangehenden Ansprüche, wobei die Barriere als Schicht mit einer Schichtdicke von 0,5 bis 20 mm, bevorzugt von 0,5 bis 5 mm, besonders bevorzugt von 0,5 bis 2 mm ausgebildet ist.

12. Mehrzelliges Batteriemodul oder Batterie umfassend mindestens eine Barriere nach mindestens einem der vorangehenden Ansprüche oder eine in Wasser getränkte Korkschicht.

13. Batteriemodul nach Anspruch 12, wobei die Barriere oder die in Wasser getränkte Korkschicht in einem Zwischenraum zwischen zwei Zellen und/oder in einem Zwischenraum zwischen einer äußeren Zelle und einer Wand des Batteriemoduls angeordnet ist.

14. Verfahren zur Abwendung der Propagation eines thermischen Ereignisses innerhalb eines mehrzelligen Batteriemoduls, bei dem eine Barriere nach mindestens einem der Ansprüche 1 bis 11 oder eine in Wasser getränkte Korkschicht zwischen den Batteriezellen angeordnet wird.
